# DEMANDE DE BREVET EUROPEEN

(11) **EP 2 286 947 A1**
(43) Date de publication de la demande: **23.02.2011**
(21) Numéro de dépôt: 10172948.1
(22) Date de dépôt: 16.08.2010
(51) Int. Cl.: B23D 53/02, B23D 55/00

(54) **Installation de sciage pour la coupe de plaques métalliques, et procédé associé**

(30) Priorité: 17.08.2009 FR 0955687
(71) Demandeur: Sermas Industrie, 38210 Saint Quentin sur Isère (FR)
(72) Inventeur: Schmitt, Bernard, 38690, BEVENAIS (FR)
(74) Mandataire: de Beaumont, Michel

(57) **Abrégé**

L'invention concerne une installation de sciage horizontal comportant une unité de sciage (1) à lame rectiligne dans une zone de sciage et dont la position est réglable en hauteur ; et un mécanisme anti-pincement (6) comportant une entretoise (62) de forme allongée et d'épaisseur supérieure à l'épaisseur du talon de la lame, et des moyens (63) pour, au moins pendant la découpe, maintenir l'entretoise à distance fixe derrière la lame, et à même hauteur que celle-ci.

## Description

### Domaine de l'invention

La présente invention concerne de façon générale les installations de sciage pour le refendage de plaques métalliques, notamment de plaques d'aluminium ou d'alliage d'aluminium.

### Exposé de l'art antérieur

Le sciage est l'une des trois techniques de production de tôles parmi le laminage, la coulée continue et le sciage. Les deux premières techniques sont généralement réservées aux productions en grande série en raison des contraintes de mises en oeuvre qu'elles comportent. L'invention s'applique à la troisième catégorie : le sciage.

Les installations de sciage de plaques ou blocs métalliques sont de plus en plus utilisées, en particulier pour obtenir des tôles en petites séries ou à la demande, avec des dimensions ou caractéristiques particulières. Le sciage offre plus de souplesse tout en laissant une grande liberté sur le choix d'alliage.

Les installations de sciage traitent des blocs métalliques (par exemple, en aluminium) coulés dans des dimensions relativement importantes, typiquement de quelques mètres de large (généralement de 1 à 3) et plusieurs mètres de long (généralement de 4 à 10) et sont équipés d'une scie à ruban horizontale pour découper une plaque ou tôle horizontalement à partir du bloc métallique.

La découpe de plaques de grande largeur entraîne que, vers la fin de la découpe, il est nécessaire de maintenir la plaque découpée légèrement à l'écart du bloc afin d'éviter un pincement de la lame sous l'effet du poids de la plaque découpée. Aujourd'hui, des coins sont introduits de part et d'autre du trait de coupe derrière la lame. Comme le bloc est généralement déplacé par rapport à la lame, les coins sont montés sur un chariot de façon à pouvoir suivre le bloc afin d'éviter un arrachement.

Toutefois, la manipulation de coins est peu aisée et engendre des risques d'arrachement ou de dégradation de l'état de surface des bords de la tôle et du bloc lors de leur introduction. Par ailleurs, le retrait des coins peut engendrer un déplacement de la tôle sciée, ce qui pose problème pour la manutention et notamment le positionnement de la tôle pour les opérations suivantes dans le processus de traitement de la tôle.

De plus, à partir d'une certaine largeur et en dessous d'une certaine épaisseur de tôle (par exemple, de l'ordre de 1,50 m de large et moins d'environ 40 mm d'épaisseur), la tôle risque quand même de s'affaisser dans sa partie centrale et le problème de pincement de la lame se repose.

Il existe donc un besoin pour une installation de sciage de blocs métalliques qui autorise un sciage sur des blocs de grande largeur sans risque de pincement de la lame.

### Résumé

Un objet d'un mode de réalisation de la présente invention est de proposer une installation de sciage à l'horizontale pour le refendage de plaque métallique qui pallie tout ou partie des inconvénients des installations connues.

Un autre objet d'un mode de réalisation de la présente invention est d'éviter le pincement d'une lame y compris pour le sciage de blocs de grande largeur.

Un autre objet d'un mode de réalisation de la présente invention est de proposer une solution simple à mettre en oeuvre.

Pour atteindre tout ou partie de ces objets ainsi que d'autres, il est prévu une installation de sciage horizontal comportant une unité de sciage à lame rectiligne dans une zone de sciage et dont la position est réglable en hauteur ; et un mécanisme anti-pincement comportant une entretoise de forme allongée et d'épaisseur comprise entre l'épaisseur du corps de la lame et l'épaisseur du trait de scie, et des moyens pour, au moins pendant la découpe, maintenir l'entretoise à distance fixe derrière la lame, et à même hauteur que celle-ci.

Selon un mode de réalisation de la présente invention, l'entretoise présente une épaisseur comprise entre l'épaisseur du talon de la lame et l'amplitude de l'avoyage de la lame.

Selon un mode de réalisation de la présente invention, lesdits moyens sont adaptés à libérer l'entretoise en fin de découpe.

Selon un mode de réalisation de la présente invention, lesdits moyens comportent des pinces adaptées à saisir l'entretoise à ses deux extrémités longitudinales.

Selon un mode de réalisation de la présente invention, l'unité de coupe est mobile verticalement par rapport à un portique entre lequel est déplacé un bloc à découper.

Selon un mode de réalisation de la présente invention, l'entretoise est un feuillard.

Selon un mode de réalisation de la présente invention, le feuillard présente une largeur de quelques dizaines de millimètres et une épaisseur de quelques millimètres.

Selon un mode de réalisation de la présente invention, la lame est horizontale dans la zone de sciage.

Il est également prévu un procédé de découpe horizontale d'une plaque dans un bloc au moyen d'une installation telle que susmentionnée, dans lequel le bloc est positionné en amont de l'unité de sciage ; les hauteurs de l'unité de sciage et du mécanisme anti-pincement sont réglées en fonction de l'épaisseur souhaitée pour la plaque ; l'unité de sciage est mise en marche et le bloc est déplacé horizontalement vers la lame ; quand la lame sort du bloc, l'entretoise est libérée par les moyens de maintien ; et la plaque est prélevée du bloc en aval de l'unité de sciage.

Selon un mode de réalisation de la présente invention, ce procédé comporte en outre l'étape consistant à ramener en marche arrière le bloc en amont de l'unité de sciage, l'entretoise étant un feuillard qui est repris par les moyens de maintien lors de son passage devant ces derniers.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue en élévation de face d'un mode de réalisation d'une installation de sciage à l'horizontale du type auquel s'applique la présente invention ;
la figure 2 est une vue en élévation arrière de l'installation de la figure 1 ;
la figure 3 est une vue en perspective illustrant le fonctionnement de l'installation des figures 1 et 2 ;
la figure 4 est une coupe longitudinale partielle du bloc de la figure 3 ;
la figure 5 est une vue en perspective d'un mode de réalisation d'une entretoise anti-pincement ;
les figures 6A et 6B sont des coupes partielles d'un mécanisme de maintien de l'élément de la figure 5, respectivement en position fermée et ouverte ; et
les figures 7A, 7B, 7C, 7D, 7E et 7F sont des vues de profil partielles illustrant la découpe d'une plaque.

De mêmes éléments ont été désignés par de mêmes références aux différentes figures.

### Description détaillée

Par souci de clarté, seuls les éléments utiles à la compréhension de l'invention ont été représentés et seront décrits. En particulier, la constitution des blocs susceptibles d'être traités par l'installation de l'invention n'a pas été détaillée, celle-ci étant compatible avec tous les blocs habituellement traités par des installations de sciage. De plus, les dispositifs et équipements de l'installation autres que le système anti-pincement n'ont pas été détaillés, l'invention étant là encore compatible avec les installations usuelles pour le reste des dispositifs et équipements.

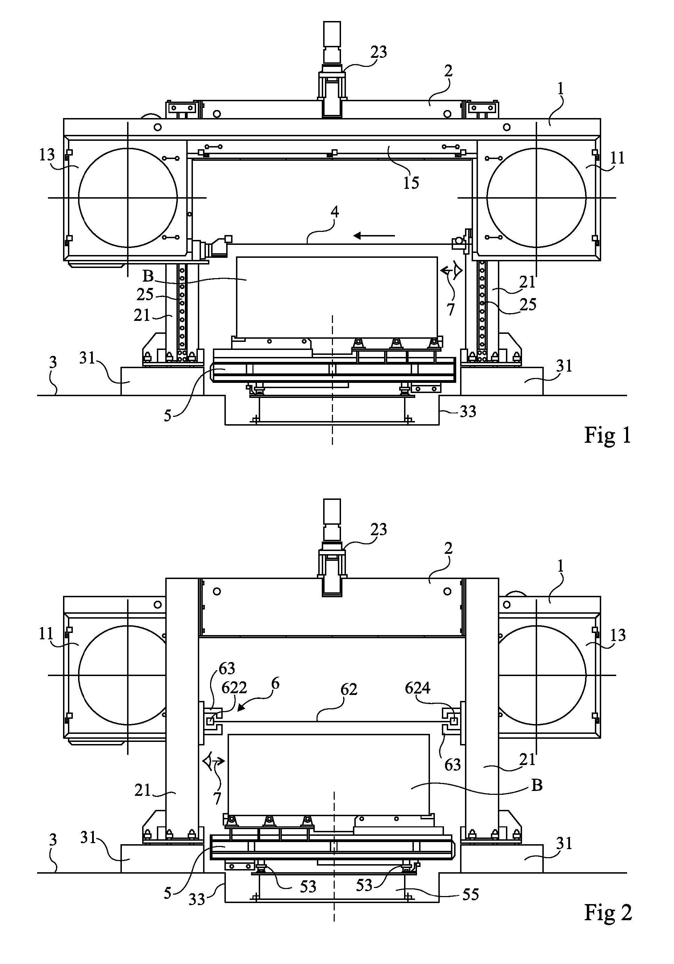

Les figures 1 et 2 représentent une installation de sciage d'aluminium selon un mode de réalisation de la présente invention. Ces figures sont des vues en élévation respectivement de face et arrière de l'installation.

Une unité de sciage 1 est portée par un portique 2 dont des pieds 21 reposent (sont généralement fixés) au sol 3 (dans l'exemple représenté en étant légèrement surélevés par des plots 31). L'unité de sciage 1 est mobile verticalement par rapport au portique 2, par exemple au moyen d'un mécanisme à vérin hydraulique 23 et à crémaillères 25 ménagées, par exemple, en face avant des pieds 21. L'unité de sciage 1 comporte une scie à ruban dont la lame 4 (visible en figure 1) est entraînée, dans une zone de sciage, dans un déplacement horizontal par un moteur et un système de poulies logés dans deux caissons latéraux 11 et 13 de l'unité 1. En partie supérieure de l'unité, la lame repasse à l'horizontale dans la direction opposée à la partie basse dans un caisson supérieur 15. La scie est une scie à ruban (tournante), à déplacement horizontal dans une zone de sciage entre les pieds 21 du portique. La hauteur de la lame peut le cas échéant être réglée sans déplacement de l'unité de sciage mais avec des moyens de réglage présents dans l'unité de sciage. La lame peut également être inclinée. La lame reste toutefois rectiligne dans la zone de sciage.

Un bloc métallique B (par exemple, en aluminium ou en alliage à base d'aluminium) est porté par un chariot 5 mobile horizontalement sur des rails 53 d'un châssis 55 reposant au sol. Dans l'exemple des figures 1 et 2, le châssis 55 est logé dans une fosse 33 réalisée dans le sol. Une telle fosse 33 est optionnelle et a pour but de gagner de la hauteur. La direction de déplacement du chariot 5 est approximativement perpendiculaire au portique.

Lors du sciage, la lame 4 est entraînée en rotation pour être mue horizontalement à une position verticale de l'unité de sciage 1 réglée en fonction de l'épaisseur de la plaque souhaitée. Le bloc B est déplacé progressivement au cours du sciage, perpendiculairement au portique 2 et passe entre les pieds 21. Le chemin suivi par la lame dans le plan horizontal de sciage n'est pas nécessairement perpendiculaire au déplacement du bloc B mais peut également être légèrement de biais pour améliorer la pénétration de la lame.

La description ci-dessus correspond à une installation classique. Divers modes d'entraînement de la lame 4, de déplacement vertical de l'unité de sciage 1 et de déplacement du bloc B peuvent être envisagés pourvu de respecter une découpe horizontale.

Selon le mode de réalisation représenté, l'installation comporte également un mécanisme anti-pincement 6 (figure 2) destiné à éviter, qu'en fin de sciage, la plaque ou tôle découpée écrase la lame 4. Ce mécanisme est basé sur l'utilisation d'une entretoise pour maintenir un écartement minimum derrière le talon de la lame. L'entretoise, de préférence une bande métallique 62 (feuillard), est tendue entre les pieds 21 du portique 2. Le feuillard 62 est à la même hauteur que la lame 4, ce qui explique les vues avant et arrière des figures 1 et 2 dans lesquelles seul un seul des éléments est visible. Le feuillard 62 est, par exemple, pris par ses extrémités respectives 622 et 624 dans des pinces 63 portées par le portique 2 ou par un support intermédiaire (non représenté).

Le feuillard 62 (ou autre entretoise) présente une épaisseur comprise entre l'épaisseur du talon de la lame et l'amplitude de son avoyage qui correspond à l'épaisseur du trait de coupe.

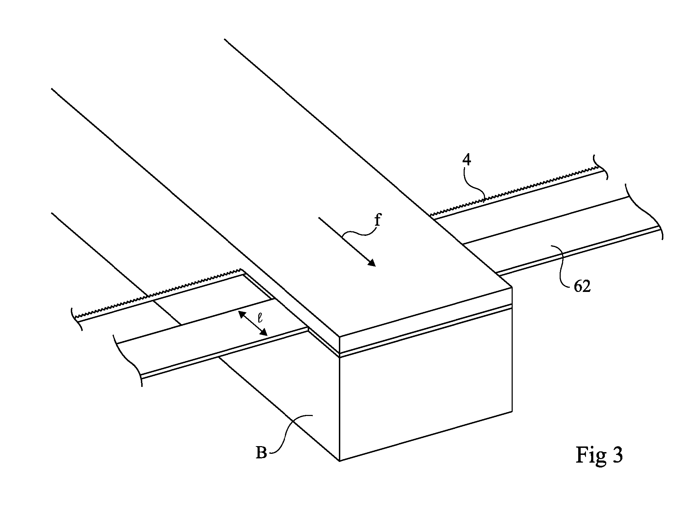

La figure 3 est une vue en perspective schématique d'un bloc B en train d'être scié par la lame 4 de la scie à ruban. Le feuillard 62 étant, pendant le sciage, dans une position fixe par rapport à la lame 4, l'avancée du bloc B par rapport à la lame 4 (flèche f) s'accompagne d'une avancée du feuillard qui suit.

A titre d'exemple particulier de réalisation, le feuillard 62 présente une largeur 1 de quelques dizaines à quelques centaines de millimètres, de préférence moins d'une centaine de millimètres (par exemple, environ 80 mm) pour limiter les frottements lors de la découpe. Le feuillard est par exemple en acier ressort ou en aluminium. Toutefois, une entretoise trop étroite (par exemple, un fil) risque, selon la rigidité du bloc, d'engendrer un poinçonnement de la tôle ou du bloc.

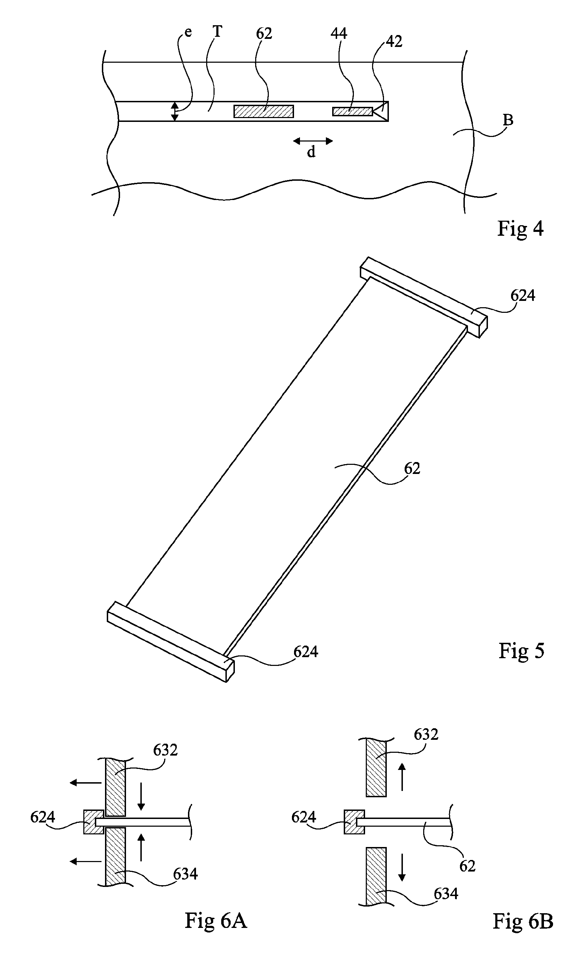

La figure 4 est une vue partielle et en coupe de l'installation au niveau du trait de coupe T. Comme indiqué ci-dessus, ce trait présente une épaisseur e qui est fonction de la denture de la lame et/ou de l'avoyage 42 de la lame 4 (certaines lames sont sans avoyage). Comme l'illustre cette figure, l'épaisseur du feuillard 62 est choisie pour être inférieure à l'épaisseur e du trait de coupe T ou trait de scie, mais supérieure à l'épaisseur du corps ou talon 44 de la lame 4. Ainsi, en fin de découpe, le feuillard 62 joue le rôle d'entretoise maintenant un écart entre la plaque découpée et le bloc B. Toutefois, au début de la découpe, il ne frotte pas grâce à son épaisseur inférieure à celle du trait de coupe.

A titre d'exemple particulier de réalisation, la distance d entre le feuillard 62 et le talon 44 de la lame 4 est de quelques dizaines à quelques centaines de millimètres (par exemple de l'ordre de cinq cents millimètres). Ces dimensions sont bien entendu adaptées à l'application en fonction de la lame concernée. Toujours à titre d'exemple particulier de réalisation, l'épaisseur du trait de coupe T est de quelques millimètres (par exemple de 2,5 à 3,5 millimètres). Le feuillard présente alors une épaisseur de quelques millimètres (par exemple de l'ordre de 2 à 2,4 millimètres) inférieure à l'épaisseur du trait de coupe et supérieure à l'épaisseur (par exemple de l'ordre de 1,5 à 2 millimètres) du talon 44 de la lame 4.

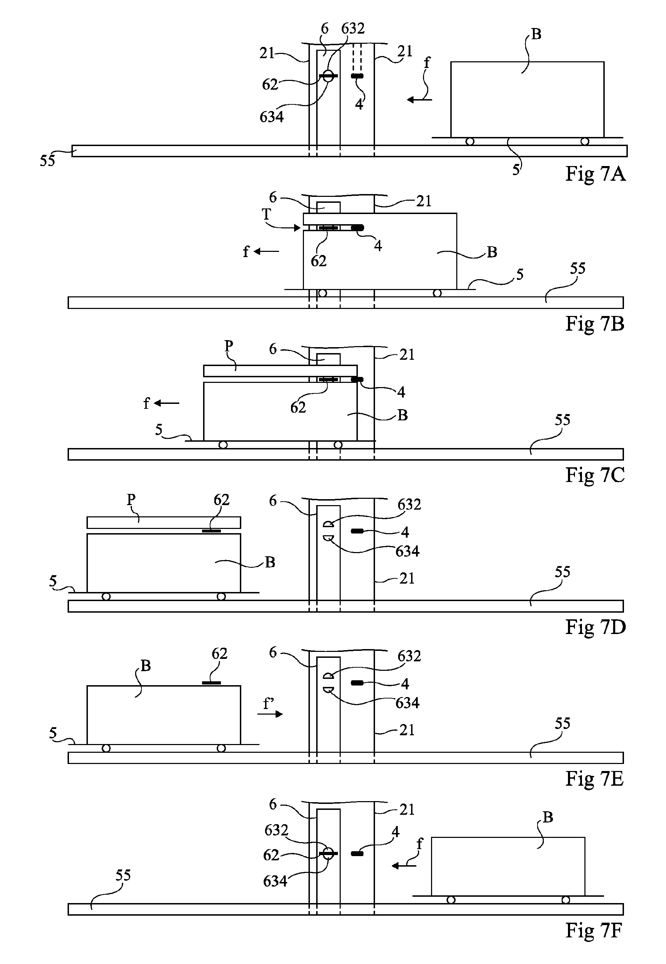

La figure 5 est une vue schématique en perspective d'un mode de réalisation d'un feuillard 62 et de ses extrémités 624. On suppose que les extrémités 624 du feuillard sont d'une épaisseur supérieure à celle de sa partie centrale jouant le rôle d'entretoise, par exemple en étant en forme de tête de marteau ou de barrette. Cela permet d'utiliser un mécanisme à pinces pour maintenir et tendre le feuillard entre les pieds 21 comme cela sera mieux compris par la suite en relation avec les figures 7A à 7F.

Les figures 6A et 6B sont des coupes partielles illustrant cet exemple de mécanisme de tenue du feuillard. Deux mâchoires 632 et 634 d'une pince 63 sont serrées (figure 6A) de façon à emprisonner la barrette 624 d'extrémité du feuillard. En figure 6B, est représentée la position ouverte où les mâchoires 632 et 634 sont écartées de façon à libérer le feuillard 62. Lorsque les extrémités du feuillard sont emprisonnées dans les deux pinces 63 d'extrémité (figure 2), il peut être tendu par le mécanisme de tenue des pinces. L'ouverture/fermeture des pinces et leur déplacement horizontal pour tendre le feuillard 62 sont, par exemple, provoqués par des vérins hydrauliques ou pneumatiques.

Les figures 7A, 7B, 7C, 7D, 7E et 7F sont des vues partielles et de profil de l'installation de sciage illustrant le fonctionnement du mécanisme anti-pincement de l'invention. La représentation de ces vues, prises dans la direction symbolisée par les flèches 7, en figure 1 et 2 est très schématique, ces figures ayant pour but d'illustrer la cinématique de l'installation lors d'une opération de coupe d'une plaque dans un bloc B d'aluminium.

Avant découpe (figure 7A), la lame 4 et le feuillard 62 sont alignés à la même hauteur choisie en fonction de l'épaisseur souhaitée pour la plaque à découper du bloc B. Le bloc B, porté par le chariot 5, est déplacé depuis l'amont de l'installation (dans le sens de progression des blocs en cours de sciage) vers la lame (flèche f) qui est actionnée par l'unité 1.

La coupe horizontale du bloc B (figure 7B) engendre un trait de coupe T dans lequel sont présents non seulement la lame 4 mais également le feuillard 62.

Grâce à son épaisseur supérieure au talon de la lame 4, le feuillard 62 évite tout pincement même lorsque la coupe arrive à la fin du bloc (figure 7C) et que le poids de l'arrière de la plaque a tendance à retomber sur l'avant du bloc. De plus, selon la largeur du bloc B, l'épaisseur de la plaque P et la rigidité de l'alliage du bloc B, un tassement peut également se produire dans la partie médiane.

Une fois la découpe terminée, les mâchoires 632 et 634 des pinces 63 libèrent le feuillard 62. Il en découle (figure 7D) que lorsque le bloc B continue à être déplacé vers l'aval pour échapper le portique 2 et permettre le déchargement de la plaque P découpée du bloc B, la plaque repose en partie arrière sur le feuillard 62.

La plaque P est retirée du bloc B (figure 7E) ce qui libère le feuillard 62 qui reste en place. Puis, le bloc B est ramené (flèche f') dans la position d'origine pour préparer la découpe suivante. De préférence, le feuillard 62 présente un état de surface rugueux au moins côté plaque P. Cela limite l'adhérence du feuillard à la plaque lorsqu'elle est séparée du bloc et permet que le feuillard reste sur le bloc B pour la coupe suivante.

Au moment où le feuillard 62 passe devant les mâchoires 632 et 634 des pinces, celles-ci sont refermées pour de nouveau solidariser (figure 7F) les positions du feuillard 62 et la lame. L'ensemble est alors placé à la hauteur souhaitée pour la coupe suivante et le cheminement décrit à partir de la figure 7A est reproduit. En variante, le feuillard est remis en place manuellement.

La présence du feuillard 62 tout au long de la découpe évite tout risque d'écrasement de la lame, notamment en fin de découpe lorsque la plaque aurait autrement tendance à frotter sur le talon de la lame. On évite ainsi également de dégrader l'état de surface du bord arrière de la plaque et du bloc.

L'utilisation d'un feuillard, solidaire en distance de la lame pendant la découpe et désolidarisé lorsque la lame sort du bloc, simplifie les opérations et évite que le feuillard lui-même ait à frotter contre la plaque et le bloc. Cela participe à préserver les états de surface des plaques découpées. En particulier, cela évite les arrachements susceptibles de se produire avec les coins classiques lorsqu'ils sont engagés à force.

Aux figures 7A à 7F, le mécanisme anti-pincement 6 a été illustré sous forme de supports rapportés contre les faces internes des pieds 21. Cela illustre le fait que ce mécanisme peut être aisément ajouté à une installation existante sans nécessiter de modification, ni ne l'unité de sciage 1, ni du portique 2. En variante, le mécanisme est intégré au portique 2 ou à l'unité de sciage 1.

Divers modes de réalisation ont été décrits, diverses variantes et modifications apparaîtront à l'homme de l'art. En particulier, la mise en oeuvre pratique de l'invention pour réaliser une installation de sciage est à la portée de l'homme du métier à partir des indications fonctionnelles données ci-dessus. De plus, les exemples particuliers de dimensions pourront être adaptés aux différentes lames utilisées. En particulier, dans une même installation, un changement de lame peut engendrer un changement de feuillard pour respecter les relations entre les épaisseurs. Le changement du feuillard est particulièrement simple si les différents feuillards possèdent des extrémités similaires pour coopérer avec de mêmes moyens de maintien 63.

En outre, bien que l'on ait fait plus particulièrement référence à la découpe de blocs d'aluminium, l'invention s'applique plus généralement à la découpe horizontale ou inclinée de plaques de dimensions telles qu'un pincement de la lame est susceptible de survenir en fin de coupe. Dans le cas d'une lame inclinée (par exemple pour couper un bloc d'épaisseur irrégulière si le bloc est lui-même incliné), la lame reste toutefois rectiligne dans la zone de sciage.

## Revendications

1. Installation de sciage horizontal comportant :
une unité de sciage (1) à lame (4) rectiligne dans une zone de sciage et dont la position est réglable en hauteur ; et
un mécanisme anti-pincement (6) comportant :
une entretoise (62) de forme allongée et d'épaisseur comprise entre l'épaisseur du corps (44) de la lame et l'épaisseur du trait de scie (T) ;
des moyens (63) pour, au moins pendant la découpe, maintenir l'entretoise à distance fixe derrière la lame, et à même hauteur que celle-ci.

2. Installation selon la revendication 1, dans laquelle l'entretoise (62) présente une épaisseur comprise entre l'épaisseur du talon (44) de la lame (4) et l'amplitude de l'avoyage de la lame.

3. Installation selon la revendication 1 ou 2, dans laquelle lesdits moyens sont adaptés à libérer l'entretoise en fin de découpe.

4. Installation selon l'une quelconque des revendications 1 à 3, dans laquelle lesdits moyens comportent des pinces (63) adaptées à saisir l'entretoise (62) à ses deux extrémités longitudinales (624).

5. Installation selon l'une quelconque des revendications 1 à 4, dans laquelle l'unité de coupe (1) est mobile verticalement par rapport à un portique (2) entre lequel est déplacé un bloc (B) à découper.

6. Installation selon l'une quelconque des revendications 1 à 5, dans laquelle l'entretoise est un feuillard (62).

7. Installation selon la revendication 6, dans laquelle le feuillard (62) présente une largeur (1) de quelques dizaines de millimètres et une épaisseur de quelques millimètres.

8. Installation selon l'une quelconque des revendications 1 à 7, dans laquelle la lame est horizontale dans la zone de sciage.

9. Procédé de découpe horizontale d'une plaque (P) dans un bloc (B) au moyen d'une installation conforme à l'une quelconque des revendications 1 à 7, dans lequel :
le bloc est positionné en amont de l'unité de sciage (1) ;
les hauteurs de l'unité de sciage et du mécanisme anti-pincement (6) sont réglées en fonction de l'épaisseur souhaitée pour la plaque ;
l'unité de sciage est mise en marche et le bloc est déplacé horizontalement vers la lame (4) ;
quand la lame sort du bloc, l'entretoise (62) est libérée par les moyens de maintien (63) ; et
la plaque est prélevée du bloc en aval de l'unité de sciage.

10. Procédé selon la revendication 9, comportant en outre l'étape de ramener en marche arrière le bloc (B) en amont de l'unité de sciage (1), l'entretoise (62) étant un feuillard qui est repris par les moyens de maintien lors de son passage devant ces derniers.
